# FASCICULE DE BREVET EUROPEEN

(11) **EP 0 675 863 B1**
(45) Date de publication et mention de la délivrance du brevet: **25.09.1996**
(21) Numéro de dépôt: 94902822.9
(22) Date de dépôt: 16.12.1993
(51) Int. Cl.: C04B 41/87

(54) **PROTECTION ANTI-OXYDATION D'UN MATERIAU A BASE DE CARBONE**
ANTIOXYDIERUNGSSCHUTZ FÜR EIN KOHLENSTOFFHALTIGES MATERIAL
ANTIOXIDATION PROTECTION FOR A CARBON-BASED MATERIAL

(30) Priorité: 18.12.1992 RU 9212719
(43) Date de publication de la demande: 11.10.1995
(73) Titulaire: AEROSPATIALE Société Nationale Industrielle, 75781 Paris Cédex 16 (FR); NIIGrafit Research Institute, Moscow, 111524 (RU)
(72) Inventeur: RODIONOVA, Valeriya Veniaminovna, Moscow, 111672 (RU); KRAVETZKII, Gennady Alexandrovich, Moscow, 107140 (RU); SCHESTAKOVA, Nadezhda Mikhailovna, Moscow, 111397 (RU); KUZNETZOV, Andrey Vasiljevich, Moscow, 121467 (RU); KOSTIKOV, Valery Ivanovich, Moscow, 117331 (RU); DEMIN, Alexander Victorovich, Moscow, 111394 (RU)
(74) Mandataire: Des Termes, Monique
(86) Numéro de dépôt international: FR9301256
(87) Numéro de publication internationale: WO9414729

(56) Documents cités:
- EP-A- 0 428 977
- EP-A- 0 435 039
- EP-A- 0 448 432
- DE-B- 1 224 652

## Description

La présente invention se rapporte au domaine de la fabrication de matériaux et articles en carbone, et est destinée à la protection contre l'oxydation de pièces fonctionnant dans un environnement oxydant, à des températures élevées. De tels matériaux et articles peuvent être utiles dans l'industrie de la métallurgie (revêtement de four, appareils de chauffage pour appareils électriques, etc.), de l'aéronautique et d'autres industries, où cette protection d'éléments et articles structuraux est requise.

### Description de l'art antérieur

Des procédés pour appliquer des revêtements protecteurs antioxydants sur des articles en carbone, qui consistent principalement à former une couche superficielle de substances inorganiques réfractaires, en particulier des carbures et borures métalliques réfractaires, sont amplement connus dans l'art.

Un procédé pour appliquer un revêtement de carbure de silicium protecteur antioxydant sur des articles en carbone-carbone, également connu dans l'art, est un procédé selon lequel on place d'abord un article dans une charge de silicium [Carry D.M., Cunningham J.A., Frahm J.R., *Space Shuttle Orbiter leading edge structural subsystem thermal performance* (Performance thermique du sous-système structural du bord d'attaque de la sonde orbitale de la navette spatiale). Communication de l'AIAA n° 82-0004]. Et ici le carbure de silicium se forme dans la couche superficielle du matériau de l'article en résultat de la diffusion du silicium et de l'exposition à la température. Ensuite l'article est imprégné de façon répétée (jusqu'à 6 fois) dans une solution de silicate de tétraoxyméthyle, avec un séchage intermédiaire après chaque cycle d'imprégnation pour assurer une imperméabilité aux gaz.

Le revêtement ainsi obtenu est utile pour fonctionner dans un courant d'air dissocié, à grande vitesse, de 1600 à 1650 °C.

Ce procédé permet d'obtenir un revêtement dont la composition est limitée à certains composants et est caractérisé par le recours à une main-d'oeuvre importante compte tenu de la nécessité d'imprégnations répétées de l'article à une limite supérieure relativement basse des températures opératoires de revêtement.

Est aussi connu dans l'art un procédé pour obtenir un revêtement protecteur sur un matériau en carbone par le dépôt de carbures de silicium et de hafnium, ainsi que de siliciure de hafnium, à partir d'un mélange gazeux de chlorures de silicium et de hafnium, de méthane, et d'hydrogène [Revêtement protecteur multicouche CVD. Compte rendu du 35^{e} symposium international de la SAMPE, n° 2, pp. 1348 à 1355, 1990]. On envoie le mélange réactionnel sur une surface préchauffée devant être protégée, et l'interaction des composants du mélange provoque le dépôt de carbure de silicium, de carbure de hafnium, et de siliciure de hafnium sur la surface de l'article.

Ce procédé permet d'obtenir un revêtement multicomposant résistant à la chaleur, utilisable dans la gamme de températures jusqu'à 1800 °C, mais nécessite un équipement spécial, et n'est pas sûr écologiquement.

En outre, un procédé pour obtenir des revêtements protecteurs borure-oxyde sur des matériaux à base de carbone par imprégnation de ceux-ci avec un mélange de résines phénolique ou furylique et de métaux réfractaires (vanadium, chrome, niobium, molybdène, tungstène), ainsi que de composants contenant du bore (bore amorphe, carbure de bore, nitrure de bore), séchage, traitement à chaud dans un milieu neutre [FR, A, 2.128.809], est aussi connu dans l'art.

Le revêtement ainsi obtenu a une résistance thermique basse (jusqu'à 1000 °C), compte tenu de la porosité de la structure.

Un autre procédé connu dans la technique est un procédé pour obtenir un revêtement protecteur de diborure de hafnium et de carbure de silicium, au moyen d'un plasma basse pression, selon lequel on envoie les composants du revêtement en poudre par un jet de plasma sur la surface devant être protégée [*Process for applying HfB*₂ + *20SiC coating from low-pressure plasma* (Procédé pour appliquer un revêtement de HfB₂ + 2OSiC à partir d'un plasma basse pression). Catalogue de *United Technologies Corp.,* 1988]. Ce procédé permet d'obtenir un revêtement multicomposant utilisable à des températures jusqu'à 2000 °C dans une atmosphère de gaz oxydant.

Toutefois, lorsqu'on applique le revêtement sur des articles de grande taille, il faut un équipement spécial avec une atmosphère contrôlée et un espace de travail plus de deux fois plus grand que la taille des articles devant être revêtus. En outre, il est pratiquement impossible d'appliquer uniformément des revêtements sur des articles de configurations compliquées ayant des cavités profondes et des rainures étroites.

En outre, un procédé CVR-Si (réaction chimique en phase vapeur avec Si) pour obtenir des revêtements protecteurs qui comprend la liaison par réaction du carbone du matériau du substrat avec du silicium par traitement de la surface devant être protégée dans des vapeurs de silicium fondu [Matériau Pyrobond PB-1300, *Ultra Carbon Co.,* Catalogue, 1982] est aussi connu dans l'art.

Dans ce cas, une pellicule de carbure de silicium imperméable se forme dans la couche superficielle de l'article.

Ce procédé se limite à procurer une couche protectrice de carbure de silicium seulement comme une pellicule fine qui a tendance à se fendiller sous le cyclage thermique, c'est-à-dire qui n'est pas durable. La résistance à l'oxydation de ce revêtement est limitée à des températures de fonctionnement non supérieures à 1750 °C.

### Description de l'invention

L'invention est destinée à obtenir par un procédé CVR-Si un revêtement superficiel multicomposant sur des matériaux et articles à base de carbone, utilisable sur une longue durée sous cyclage thermique à des températures allant jusqu'à 2000 °C, incluant des conditions de courant gazeux à haute température.

La solution du problème en question est assurée par le procédé revendiqué pour obtenir des revêtements protecteurs sur des matériaux et articles à base de carbone, qui comprend le traitement de la surface devant être protégée avec des vapeurs de silicium au cours du traitement à chaud de celle-ci, et qui est caractérisé en ce que, avant le traitement aux vapeurs de silicium, on applique une couche d'une composition constituée d'une charge de HfB₂ + C en poudre et d'un liant à base de carboxyméthylcellulose sur la surface devant être protégée, puis on sèche dans des conditions normales jusqu'à ce qu'on atteigne le séchage complet.

De préférence, la composition devant être appliquée contient 95 % en poids de HfB₂ + 5 % en poids de C, du noir de carbone, du coke, ou du graphite artificiel étant utilisé comme constituant carboné (C), et une solution de carboxyméthylcellulose aqueuse à 5 %, comme liant, dans un rapport volumique de 1:1 aux composants en poudre, et la couche de HfB₂ + C est exposée à des vapeurs de silicium sous une pression non supérieure à 10 mm de Hg, à une température d'environ 1850 + 50 °C (1850 à 1900 °C), pendant 1 à 3 h.

De préférence, on applique la couche de la composition ci-dessus sur un substrat composite non siliciuré (carbone pur).

Le borure de hafnium qui est présent dans la composition devant être appliquée sur la surface de l'article, confère au revêtement une réfractarité et un coefficient de dilatation thermique (CTE) améliorés, proches de ceux du substrat composite (article).

Le constituant carboné (C) fournit une meilleure adhésion du revêtement au matériau du substrat. L'exposition du revêtement HfB₂ + C et du substrat à base de carbone à des vapeurs de silicium provoque la réaction du silicium avec le carbone du revêtement et du matériau du substrat, ce qui provoque la formation de carbure de silicium tant dans le revêtement que dans la couche superficielle du matériau du substrat. Dans ce cas, la limite entre le revêtement et le substrat devient vague en raison de l'interpénétration des carbures se formant dans le revêtement et dans le matériau du substrat. Finalement, un revêtement de composition HfB₂ + SiC + Si se forme.

Ainsi, l'application de la composition protectrice sur la surface d'un article non siliciuré fournit non seulement une meilleure adhésion entre le revêtement et le substrat à base de carbone mais aussi une diminution du nombre d'étapes de traitement, avec tout ce que cela implique.

### Réalisation préférée de l'invention

Pour la réalisation du procédé revendiqué, on prépare une charge en poudre ayant une composition de 95 % en poids de HfB₂ + 5 % en poids de C en mélangeant complètement les composants ci-dessus. Au mélange obtenu on ajoute une fraction volumique égale d'une solution de carboxyméthylcellulose aqueuse à 5 % et on agite jusqu'à ce qu'on obtienne une masse homogène.

On applique la masse ci-dessus au pinceau ou en la pulvérisant sur la surface devant être protégée et on sèche dans des conditions normales jusqu'à ce qu'on atteigne un séchage complet, cette étape étant répétée trois fois. L'article revêtu est ensuite placé dans un four à vide électrique avec une charge de silicium.

On réalise le traitement à chaud dans les conditions suivantes :
* Pression non supérieure à 10 mm de Hg
* Température 1850 + 50 °C
* Temps de séjour à une température donnée 1 à 3 h

Une teneur en constituant carboné dans la composition devant être appliquée, de moins de 5 %, provoque une augmentation du CTE du revêtement et rend son fissurage et son décollement du substrat plus probables. En revanche, l'augmentation de la teneur en constituant carboné au-dessus de 5 % provoque une fragilité accrue du revêtement protecteur due à la formation de carbure de silicium en de grandes quantités.

Une solution de carboxyméthylcellulose aqueuse à 5 %, utilisée comme liant en raison de sa bonne mouillabilité, fournit une répartition uniforme de la composition appliquée sur la surface du substrat jusqu'à ce qu'on obtienne une épaisseur optimale.

Aux concentrations de carboxyméthylcellulose inférieures à 5 %, le revêtement obtenu se détache et adhère mal au matériau du substrat. Avec les concentrations supérieures à 5 %, la composition appliquée forme une couche non uniforme, l'application de celle-ci sur des bords fins et des cavités présents sur la surface de l'article étant difficile.

Des considérations semblables forment la base pour définir le rapport charge en poudre/liant.

Lorsqu'on définit les conditions pour le traitement à chaud de l'article revêtu dans des vapeurs de silicium, le principal souci est de fournir des conditions dans lesquelles une évaporation maximale du silicium et une conversion la plus élevée possible de carbone en carbure de silicium se produisent. Par exemple, à une pression supérieure à 10 mm de Hg dans l'espace de travail du four, le taux d'évaporation n'est pas suffisant pour fournir une conversion totale du carbone en carbure de silicium.

A des températures inférieures à 1850 °C, le taux d'évaporation du silicium décroît, ce qui donne une interaction incomplète entre le carbone et le silicium ainsi qu'un abaissement de la résistance à l'oxydation du revêtement. Au-dessus de 1900 °C, le carbure de silicium formé commence à se décomposer, ce qui abaisse la résistance à l'oxydation du revêtement.

Le maintien de l'article revêtu à la température ci-dessus pendant moins d'une heure ne permet pas d'obtenir une carbonisation complète des particules de carbone tandis qu'une exposition supérieure à 3 h provoque un développement excessif de cristaux de carbure de silicium, ce qui accroît la perméabilité aux gaz et la fragilité du revêtement.

Un avantage de ce procédé pour obtenir des revêtements protecteurs sur des matériaux et articles à base de carbone est que le revêtement obtenu s'adapte aisément aux conditions de fonctionnement.

Au cours de la réaction du revêtement avec l'oxygène de l'environnement de fonctionnement, des verres complexes de borosilicate réfractaires, contenant du hafnium, se forment pour fournir non seulement la protection du substrat en carbone à des températures élevées mais aussi (en vertu de la transition des verres à un état viscoélastique aux températures de fonctionnement) l'autoguérison des défauts (fissures, microcratères) s'y formant.

Un autre avantage du procédé revendiqué est qu'il combine la siliciuration avec la formation d'un revêtement superficiel réfractaire antioxydant.

Afin d'approfondir la présente invention, des exemples sont donnés ci-dessous pour illustrer l'effet des paramètres du procédé de revêtement sur la performance de matériaux à base de carbone ayant ce revêtement.

Sur des échantillons d'un graphite siliciuré de 40*40 mm, on a appliqué un revêtement de la composition ci-dessus et on a traité à chaud dans des vapeurs de silicium dans les conditions ci-dessus. Les échantillons revêtus ont ensuite été chauffés dans un four à induction à une température non inférieure à 1750 °C pendant 30 min. dans la convection d'air atmosphérique naturelle.

Comme critère de performance du revêtement, on a pris la perte de masse de l'échantillon (% en poids) sur une période d'essai.

Les résultats obtenus sont exposés au tableau 1.

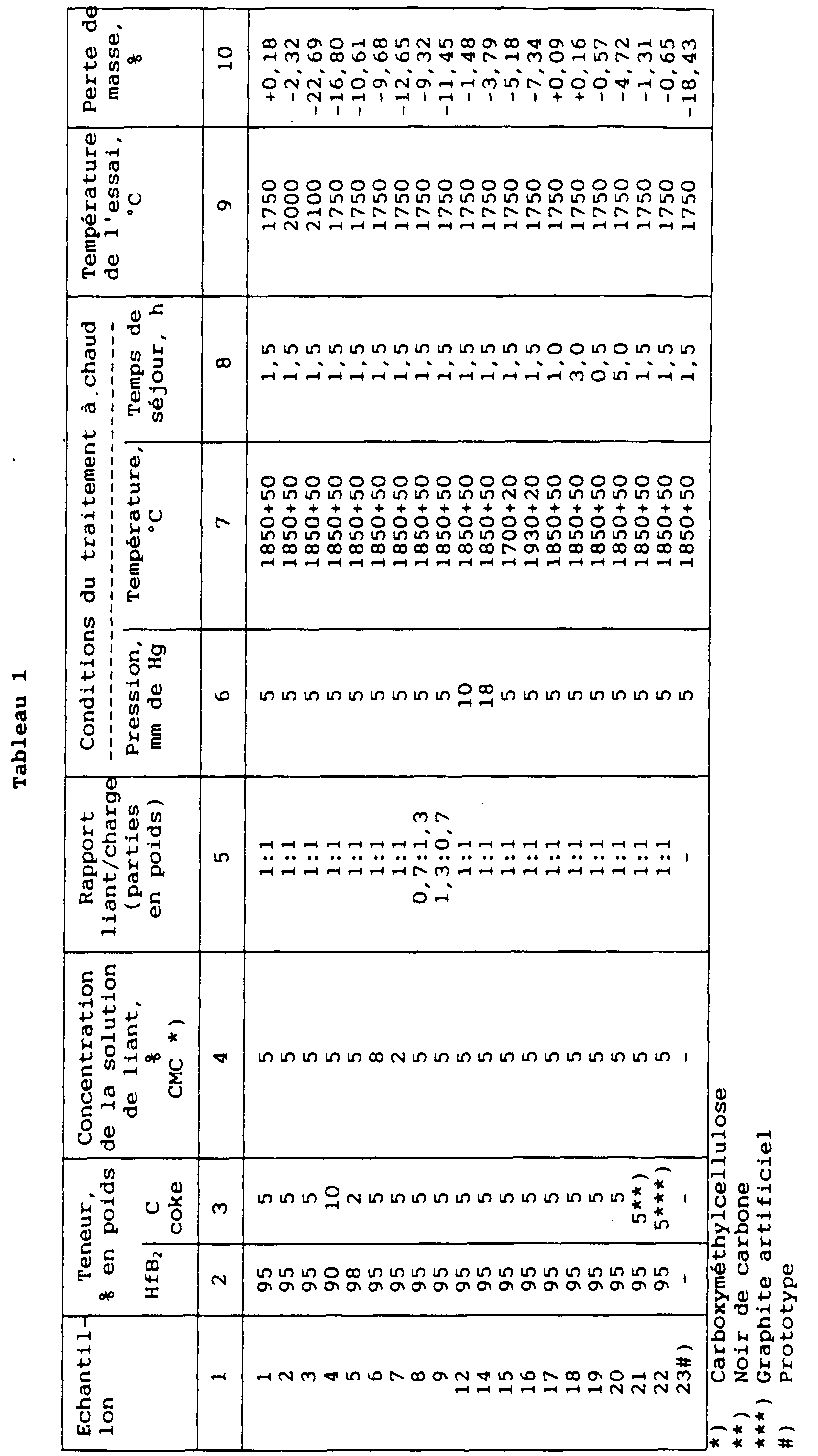

En outre, on a testé des revêtements obtenus selon le procédé revendiqué dans des conditions simulant celles du fonctionnement réel. On les a appliqués sur des articles à base de carbone de diverses configurations et dimensions, incluant ceux réalisés en un composite carbone-carbone, et après un traitement approprié on les a soumis à un essai.

**Exemple 1**. Sur des échantillons d'un matériau carbone-carbone siliciuré bidimensionnel à base d'un tissu à bas module, TNU (THY), d'une densité de 1,82 g/cm³, de 30*6 mm, on a appliqué un revêtement de la composition (95 HfB₂ + 5 C) % en poids, une solution de carboxyméthylcellulose à 5 % étant utilisée comme liant. Le traitement à chaud dans des vapeurs de silicium a été réalisé à la température de 1900 °C pendant 1,5 h sous la pression de 0,1 mm de Hg.

On a réalisé des essais des échantillons sur un plasmatron sans courant, à grande vitesse, VGU-4 (BΓY-4), dans un courant d'air dissocié sous une pression de 0,1 à 0,35 atm. et un débit de courant gazeux de 130 à 205 m/s. Ces essais simulaient les conditions les plus dures du cyclage thermique de l'article dans un milieu oxydant.

Les échantillons ont été soumis à des charges cycliques (la durée d'un cycle était de 10 min.).

La perte de masse de l'échantillon sur la période d'essai a été prise comme un critère d'évaluation. Les résultats obtenus sont exposés au tableau 2.

**Tableau 2**

| Nombre de cycles d'essai | Température d'essai, °C | Pression, atm. | Perte de masse, mg |
|---|---|---|---|
| 1 | 1350 | 0,10 | +0,8 |
| 1 | 1500 | 0,10 | +2,9 |
| 1 | 1760 | 0,19 | +12,3 |
| 1 | 1760 | 0,18 | +36,2 |
| 4 | 1760 | 0,20 | +57,7 |
| 3 | 1760 | 0,20 | -35,6 |
| 1 | 1860 | 0,35 | -60,7 |

On n'a pas détecté de changement visible de la qualité de la surface du revêtement (fissures ou décollement) après les essais.

**Exemple 2**. Sur des échantillons d'un matériau carbone-carbone bidimensionnel à base de la fibre de haut module UMN-4 (BMH-4), d'une densité de 1,75 g/cm³, d'une taille de 30*65*5 mm, sous la forme de pales de turbine à gaz, on a appliqué un revêtement de 95 % en poids de HfB₂ + 5 % en poids de C, dans une solution de carboxyméthylcellulose à 5 %, pris dans le rapport 1:1, de 300 µm d'épaisseur. Les échantillons revêtus ont été traités dans des vapeurs de silicium à la température de 1870 °C sous 5 mm de Hg pendant 2 h. Ils ont été essayés au banc dans un courant de produits de combustion d'un mélange kérosène-air : température du courant jusqu'à 2000 °C, pression de 3,0 à 3,5 atm., débit de 300 m/s. Le critère d'évaluation était la perte de masse du matériau revêtu pour la période d'essai. Les résultats obtenus sont présentés au tableau 3.

**Tableau 3**

| Température d'essai, °C | Pression, atm. | Durée d'essai, min. | Perte de masse, mg |
|---|---|---|---|
| 1200 | 3,025 | 30 | +2,7 |
| 1300 | 3,050 | 60 | +3,9 |
| 1450 | 3,115 | 60 | -3,4 |
| 1600 | 3,200 | 60 | -10,8 |
| 1750 | 3,350 | 30 | -23,6 |

On n'a pas détecté de défauts superficiels visibles.

**Exemple 3**. Sur des échantillons d'un matériau carbone-carbone siliciuré bidimensionnel à base du tissu URAL-22-T (YPAΠ-22-T) et la bande LUP-01 (ΠYπ-01) (rapport 2:1) d'une taille de 200*170*10 mm, après la siliciuration en masse, on a appliqué un revêtement constitué de 95 % en poids de HfB₂ et de 5 % en poids de coke, mélangé avec une solution de carboxyméthylcellulose à 5 % dans le rapport volumique de 1:1. L'épaisseur du revêtement était de 300 µm. Le traitement à chaud a été réalisé dans un four à vide électrique à la température de 1900 °C pendant 1 h dans des vapeurs de silicium, sous la pression de 10 mm de Hg. Les échantillons revêtus ont été testés au banc dans un courant gazeux de produits de combustion de carburant d'aviation ayant une température supérieure à 1300 °C, pression de 0,3 MPa. Le courant a été envoyé sur l'échantillon en plaque revêtu à un angle de 23 degrés.

Les résultats ont montré que la perte totale de masse de l'échantillon revêtu était de 1,6 % en poids pour 80 min. d'exposition dans des conditions de cyclages thermiques (la durée d'un cycle était de 20 min.).

On n'a pas détecté de défauts visibles sur la surface de la plaque revêtue.

**Exemple 4**. Sur un échantillon cylindrique creux de 60*150 mm et 5 mm d'épaisseur d'un matériau carbone-carbone siliciuré de qualité GRAVIMOL, on a appliqué (sur chaque côté), par une technique de coulée en barbotine-cuisson, un revêtement constitué de 95 % en poids de diborure de hafnium et de 5 % en poids d'une charge de carbone (coke de pétrole). Ensuite, le matériau revêtu a été traité dans des vapeurs de silicium à la température de 1900 °C pendant 3 h, sous une pression de 5 mm de Hg. L'échantillon a été testé au banc dans un courant gazeux à haute température de produits de combustion de carburant d'aviation. Caractéristiques du courant : capacité oxydante = 1,1 ; T = 2000 °C, P = 0,3 MPa, U = 300 m/s, le sens du courant gazeux étant le long de l'axe de l'échantillon. Les essais étaient cycliques. Le chauffage à 2000 °C a été réalisé pendant 30 min., en maintenant à cette température pendant 2,5 h, suivi d'un refroidissement à température ambiante pendant 40 min. La qualité du revêtement a été évaluée en termes de la perte de masse de l'échantillon et de l'état de sa surface.

Les résultats des essais ont montré que pendant 30 min. de fonctionnement dans des conditions de charge thermique, la perte de masse de l'échantillon était de 8,2 %. La qualité de la surface de l'échantillon était satisfaisante.

**Exemple 5**. Sur des échantillons d'un graphite non siliciuré de qualité GMZ (ΓM3) de 40*40 mm, on a appliqué un revêtement antioxydant protecteur en traitant à chaud dans des vapeurs de silicium, dans un four à vide électrique à la température de 1900 °C, sous 10 mm de Hg, pendant 1,5 h, de la composition suivante : 50 parties en volume de (95 % en poids de HfB₂ + 5 % en poids de C) + 50 parties en volume de carboxyméthylcellulose à 5 %. Les essais ont été réalisés dans un four à induction de type ouvert à la température de 1750 °C sous la convection d'air atmosphérique naturelle. Les essais étaient cycliques. La durée d'un cycle était de 30 min. La qualité du revêtement a été évaluée en termes de la perte de masse de l'échantillon revêtu pendant la durée de l'essai.

Les résultats obtenus sont présentés au tableau 4.

**Tableau 4**

| N° | Durée d'essai, min. | Perte de poids, % en poids | Vitesse d'oxydation, g/(cm²*min.) |
|---|---|---|---|
| 1 | 30 | +0,18 | +0,59*10⁻⁴ |
| 2 | 60 | +0,09 | +0,29*10⁻⁴ |
| 3 | 90 | +0,18 | +0,59*10⁻⁴ |
| 4 | 120 | +0,27 | +0,88*10⁻⁴ |
| 5 | 150 | +0,18 | +0,59*10⁻⁴ |
| 6 | 180 | -0,46 | -1,18*10⁻⁴ |

On n'a pas détecté de défauts visibles sur la surface de l'échantillon.

Les résultats des essais ont montré que les paramètres revendiqués de la composition de revêtement et les conditions de traitement à chaud garantissent une bonne exploitabilité des articles revêtus dans des conditions proches de celles de l'utilisation réelle.

Le procédé revendiqué pour obtenir un revêtement :
- garantit la protection contre l'oxydation de matériaux contenant du carbone à une température de fonctionnement de 1700 à 2000 °C ;
- permet d'appliquer des revêtements sur des articles de toutes les configurations et dimensions ;
- ne nécessite pas d'équipement spécial ;
- est utile pour revêtir des articles réalisés en matériaux carbonés tant siliciurés au préalable que sans ce traitement préalable.

### APPLICATION INDUSTRIELLE

La présente invention peut être utile dans l'industrie pour la protection contre l'oxydation d'articles à base de carbone fonctionnant à des températures élevées.

Pour l'introduction industrielle de la présente invention il suffit de disposer de fours ayant un espace de travail approprié pour contenir les articles devant être traités.

## Revendications

1. Procédé d'obtention de revêtements protecteurs sur des matières et des articles à base de carbone, qui comprend le traitement à chaud de la surface devant être protégée dans des vapeurs de silicium, caractérisé en ce qu'avant ledit traitement aux vapeurs de silicium, on recouvre la surface devant être protégée d'une couche de la composition constituée d'une charge HfB₂ + C en poudre et d'un liant à base de carboxyméthylcellulose, puis on sèche dans des conditions normales jusqu'à ce qu'elle soit complètement sèche.

2. Procédé selon la revendication 1, caractérisé en ce que le rapport desdits composants en poudre HfB₂:C de ladite composition est de 95:5.

3. Procédé selon la revendication 1 ou 2, caractérisé en ce que ledit composant en carbone (C) est du noir de carbone.

4. Procédé selon la revendication 1 ou 2, caractérisé en ce que ledit composant en carbone (C) est du graphite artificiel.

5. Procédé selon la revendication 1 ou 2, caractérisé en ce que ledit composant en carbone (C) est du coke.

6. Procédé selon l'une des revendications 1,2,3,4 et 5, caractérisé en ce que ladite carboxyméthylcellulose est utilisée comme solution aqueuse à 5 %, dans un rapport volumique auxdits composants en poudre de 1:1.

7. Procédé selon l'une des revendications 1,2,3,4, 5 et 6,caractérisé en ce que ladite couche de HfB₂ + C est traitée dans des vapeurs de silicium à une pression ne dépassant pas 10 mm de Hg, à une température d'environ 1 850 à 1900 °C pendant 1 à 3 h.

8. Procédé selon l'une des revendications 1,2,3,4, 5,6, et 7, caractérisé en ce qu'on applique ladite couche de la composition constituée de la charge HfB₂ + C et du liant à base de carboxyméthylcellulose sur une matière en carbone ou un substrat d'article non siliciuré.

## Patentansprüche

1. Verfahren zur Erzeugung von Schutzbeschichtungen auf Materialien und Gegenständen auf Kohlenstoffbasis, welches die Wärmebehandlung der Oberfläche umfaßt, bevor sie mit Siliciumdampf umfaßt, geschützt wird, dadurch gekennzeichnet, daß man vor dieser Behandlung mit Siliciumdampf die Oberfläche, bevor sie geschützt wird, mit einer Schicht einer Zusammensetzung, die aus einer Charge HfB₂ + C in Pulverform und einem Klebstoff auf Carboxymethylcellulosebasis gebildet wird, bedeckt und danach unter Normalbedingungen trocknet, bis sie vollständig trocken ist.

2. Verfahren nach Anspruch 1, dadurch gekennzeichnet, daß das Verhältnis der pulverförmigen Bestandteile HfB₂:C der Zusammensetzung 95:5 ist.

3. Verfahren nach Anspruch 1 oder 2, dadurch gekennzeichnet, daß der Kohlenstoffbestandteil (C) Ruß ist.

4. Verfahren nach Anspruch 1 oder 2, dadurch gekennzeichnet, daß der Kohlenstoffbestandteil (C) künstlicher Graphit ist.

5. Verfahren nach Anspruch 1 oder 2, dadurch gekennzeichnet, daß der Kohlenstoffbestandteil (C) Koks ist.

6. Verfahren nach einem der Ansprüche 1, 2, 3, 4 und 5, dadurch gekennzeichnet, daß die Carboxymethylcellulose als 5 %ige wässrige Lösung in einem Volumenverhältnis von 1:1 zu den Pulverbestandteilen verwandt wird.

7. Verfahren nach einem der Ansprüche 1, 2, 3, 4, 5 und 6, dadurch gekennzeichnet, daß die Schicht aus HfB₂ + C mit Siliciumdampf bei einem Druck von nicht mehr als 10 mm Hg bei einer Temperatur von 1850 bis 1900°C über 1 bis 3 h behandelt wird.

8. Verfahren nach einem der Ansprüche 1, 2, 3, 4, 5, 6 und 7, dadurch gekennzeichnet, daß man die Schicht, die aus der Charge aus HfB₂ + C und dem Klebstoff auf Carboxymethylcellulosebasis gebildet wird, auf ein Kohlenstoffmaterial oder ein Substrat eines nicht siliciumhaltigen Gegenstandes anwendet.

## Claims

1. A process for obtaining protective coatings on carbon-based materials and articles, which comprises heat treatment of the surface to be protected in silicon vapors, **characterized in that** prior to said silicon vapor treatment, the surface to be protected is covered uith a layer of the composition consisting of HfB2 + C powdery filler and a carboxymethyl cellulose-based binder, followed by drying under normal conditions till it is completely dry.

2. A process according to claim 1, **characterized in that** said powdery components of said composition are taken in the HfB2; C ratio of 95 : 5.

3. A process according to anyone of claims 1,2, **characterized in that** said carbon component (C) is carbon black.

4. A process according to anyone of claims 1,2, **characterized in that** said carbon component (C) is artificial graphite.

5. A process according to anyone of claims 1,2, **characterized in that** said carbon component (C) is coke.

6. A process according to anyone of claims 1, 2, 3, 4, 5, **characterized in that** said carboxymethyl cellulose is used as a 5 % aqueous solution in the volume ratio to said powdery components of 1:1.

7. A process according to anyone of claims 1,2,3,4,5,6, **characterized in that** said HfB2 + C layer is treated in silicon vapors under a pressure of not over 10 Hg mm, at a temperature of about 1850 to 1900°C, for 1 to 3 h.

8. A process according to anyone of claims 1, 2, 3, 4, 5, 6, 7, **characterized in that** said layer of the composition consisting of the HfB2 + C filler and the carboxymethyl cellulose-based binder is applied onto a non-siliconized carbon material or article substrate.
